# EUROPÄISCHE PATENTANMELDUNG

(11) **EP 2 131 049 A1**
(43) Veröffentlichungstag der Anmeldung: **09.12.2009**
(21) Anmeldenummer: 08010170.2
(22) Anmeldetag: 04.06.2008
(51) Int. Cl.: F16C 9/00, F16C 17/22, F16C 33/10, F16C 33/74

(54) **Lageranordnung**

(71) Anmelder: Carl Freudenberg KG, 69469 Weinheim (DE)
(72) Erfinder: Bock, Eberhard, 69509 Mörlenbach (DE); Gramlich, Martin, 69493 Leutershausen (DE); Frenzel, Ulrich, 70839 Gerlingen (DE)

(57) **Zusammenfassung**

Lageranordnung (1) zur Lagerung einer Welle (2) in einem Gehäuse (3), wobei in dem Gehäuse (3) zumindest eine schalenförmige Lagerfläche (4) ausgebildet ist, auf der die Welle (2) positionierbar ist, wobei sich zwischen Lagerfläche (4) und Welle (2) ein Spalt (5) ausbildet und wobei in dem Spalt (5) wenigstens ein Drosselelement (6) vorgesehen ist, wobei die Lagerfläche (4) und/oder die der Welle zugewandte Fläche (7) des Drosselelementes (6) mit einer hydrodynamischen Oberflächenstruktur (8) versehen ist.

## Beschreibung

### Technisches Gebiet

Die Erfindung betrifft eine Lageranordnung zur Lagerung einer Welle in einem Gehäuse, wobei in dem Gehäuse zumindest eine schalenförmige Lagerfläche ausgebildet ist, auf der die Welle positionierbar ist, wobei sich zwischen Lagerfläche und Welle ein Spalt ausbildet und wobei in dem Spalt wenigstens ein Drosselelement vorgesehen ist.

### Stand der Technik

Wellen von Verbrennungsmotoren werden meist in Gleitlagern gelagert. Ein Gleitlager umfasst eine Lagerfläche, die zumindest teilweise die zu lagernde Welle umschließt, wobei sich zwischen Lagerfläche und Welle ein Spalt ergibt in dem sich ein Schmiermittel befindet. Diese Schmiermittel können durch Bohrungen, Nute oder andere Ausnehmungen in der Lagerfläche oder auch in der Welle in den Spalt gelangen. Der Spalt der Lageranordnung ist durch unterschiedliche Wärmeausdehnungskoeffizienten von Gehäuse und Welle Schwankungen unterworfen. Dabei führt ein zu großer Spalt zu einem unerwünscht großen Abfluss des Schmiermittels aus der Lageranordnung, was zu einem Abreißen des Schmierfilms in dem Spalt führen kann und damit zu einem vorzeitigen Verschleiß der Lageranordnung. Ein derartiges Problem ergibt sich insbesondere bei der Verwendung von Leichtmetall bei der Konstruktion des Gehäuses, da sich der Wärmeausdehnungskoeffizient von Leichtmetall von dem Wärmeausdehnungskoeffizienten von Stahl, dem meist für Wellen verwendeten Werkstoff für Stahl unterscheidet. Durch das zusätzliche Drosselelement ergibt sich eine weitere Reibpaarung in der Lageranordnung.

### Darstellung der Erfindung

Der Erfindung liegt die Aufgabe zugrunde, die Lageranordnung so weiter zu entwickeln, dass sich die Reibung in der Lageranordnung verringert.

Diese Aufgabe wird mit den Merkmalen von Anspruch 1 gelöst. Auf vorteilhafte Ausgestaltungen nehmen die Unteransprüche Bezug.

Zur Lösung der Aufgabe sind die Lagerfläche und/oder die der Welle zugewandte Fläche des Drosselelementes mit einer hydrodynamischen Oberflächenstruktur versehen. Die hydrodynamisch aktive Oberflächenstruktur bewirkt ein Aufstauen des durch die Rotation mitgeschleppten Fluids. Dadurch steigt der Schleppdruck lokal an, was eine Entlastung der Gleitflächen und eine Verringerung der Festkörperreibung bewirkt. Eine Oberflächenstruktur, die in die Lagerfläche eingebracht ist, bewirkt ein gezieltes Lenken des Schmiermittels innerhalb der Lageranordnung.

Die Oberflächenstruktur kann durch Ausnehmungen gebildet sein. Vorzugsweise nehmen die Breite und die Tiefe der Ausnehmung, in Strömungsrichtung des Fluids betrachtet, ab. Zwischen dem Drosselelement und der zu lagernden Welle ergibt sich bei Rotation eine Relativbewegung. Das in der hydrodynamischen Struktur befindliche Fluid wird dabei mitgeschleppt und staut sich in der Spitze der Ausnehmung. Die Höhe des Schleppdrucks ist abhängig von der Länge, der Breite und der Tiefe der hydrodynamischen Struktur, insbesondere in dessen Spitze. Je größer der durch die hydrodynamisch aktive Struktur bewirkte Schleppdruck ist, desto größer ist die Entlastung der Gleitflächen und desto kleiner ist damit die Reibung und die dadurch dissipierte Energie. Durch die Verjüngung in der Breite und die abnehmende Tiefe in Richtung auf die Spitze der Ausnehmung steigt der Schleppdruck ebenfalls in Richtung auf die Spitze an. Bei hohen Drehzahlen bewirkt der Schleppdruck die Trennung der Gleitflächen von Dichtung und Nut. Dabei ist die Ausnehmung vorzugsweise so ausgebildet, dass der Schleppdruck drehrichtungsunabhängig aufgebaut werden kann. Dazu kann die Ausnehmung symmetrisch ausgebildet sein und beispielsweise eine ovale Grundform aufweisen. Vorzugsweise sind mehrere derartiger Ausnehmungen über den Umfang verteilt angeordnet Dazu können 5 bis 50 Ausnehmungen je Grenzfläche vorgesehen sein. Vorzugsweise erstrecken sich die Ausnehmungen über einige Millimeter, also im makroskopischen Bereich. Es ist jedoch auch denkbar, Ausnehmungen mit mikroskopischer Erstreckung, einigen Mikrometern vorzusehen. Hier sollten jedoch mehr als 100 Ausnehmungen vorgesehen werden. Die Ausnehmung kann keilförmig oder konisch ausgebildet sein. Derartige Ausnehmungen sind besonders einfach herstellbar und bewirken einen hohen Schleppdruck in der Spitze der Ausnehmung. Die Tiefe und/oder die Breite der Ausnehmung können sich unter einem Winkel von 0,5 bis 10° verjüngen. In diesem Bereich erfolgt ein besonders vorteilhafter Aufbau des Schleppdrucks. Die hydrodynamisch aktive Struktur kann so ausgebildet sein, dass sie drehrichtungsunabhängig wirksam ist. Dadurch vereinfacht sich die Montage, da Rechteckdichtungen paarweise eingebaut werden und eine Kontrolle der Drehrichtung nachteilig ist. Die hydrodynamisch aktive Struktur kann in dem Formgebungsprozess der Rechteckdichtung erzeugbar sein. Als Formgebungsprozess kommt beispielsweise Spritzgießen und Compression-Molding in Frage. Dabei wird die Formgebung der hydrodynamischen Struktur in den Formgebungsprozess der Dichtung integriert, wodurch sich die Fertigung vereinfacht.

Die Ausnehmungen können den Flanken zugeordnet sein. Beispielsweise können die Ausnehmungen kreissegmentförmig sein und sich in Richtung der Seitenwände öffnen. Dabei ergibt sich ein durchgehender mittlerer Bereich in der Fläche des Drosselelementes.

Die Ausnehmungen können sich über die gesamte Breite der Fläche erstrecken. Dabei können die Ausnehmungen als quer oder schräg verlaufende Nuten oder trapezförmige Vertiefungen ausgebildet sein. Derartige Ausnehmungen wirken gleichzeitig als Bypass und erlauben einen Schmiermittel-Strom aus der Lageranordnung heraus.

Die Oberflächenstruktur kann aus einer Vielzahl von Erhebungen und Vertiefungen gebildet sein. Durch diese orangenhaut-artige Struktur verringert sich die Reibung.

Die Oberflächenstruktur kann eine Beschichtung umfassen. Diese Beschichtung kann als Verschleißschutz-Beschichtung oder als reibungsreduzierenden Beschichtung ausgebildet sein. Derartige Verschleißschutz-Beschichtungen sind beispielsweise Plasmapolymerschichten, Diamond-Like-Carbon-Schichten oder eine Beschichtung mittels einer physikalischen Gasphasenabscheidung (PVD-Beschichtung). Diese Beschichtungen verhindern einen vorzeitigen Verschleiß des Drosselelementes. Die Beschichtung kann auch aus PTFE bestehen und weist dann eine reibungsreduzierende Wirkung auf.

Die Lagerfläche und/oder die Fläche können aktiviert sein. Die Aktivierung der Fläche des Drosselelementes oder der Lagerfläche erfolgt vorzugsweise mittels einer Plasmabehandlung oder einer Coronabehandlung. Durch die Aktivierung verringert sich die Benetzbarkeit der Fläche, was wiederum zu einer Verringerung der Reibung führt. Es ist auch denkbar, dass die zu lagemde Welle entsprechend behandelt ist.

Das Drosselelement kann aus einem Werkstoff enthaltend Füllstoffe erzeugt sein, wobei die Füllstoffe an der der Welle zugewandten Oberfläche zumindest teilweise herausgelöst sind. Drosselelemente werden beispielsweise aus Polytetrafluorethylen (PTFE) hergestellt. PTFE ist gegenüber einer Vielzahl von Chemikalien beständig und weist einen geringen Reibbeiwert auf. Rechteckdichtungen aus PTFE werden meist aus Halbzeugen, wie beispielsweise Rohren, hergestellt oder können mittels Sintern erzeugt werden. Es ist auch denkbar eine Rechteckdichtung aus einem mit PTFE getränkten Vlies herzustellen. Rechtdichtungen aus einem PTFE-Vlies weisen gegenüber solchen aus reinem PTFE ein verbessertes Kriechverhalten auf und haben eine geringere Extrusionsneigung. Dazu wird ein Halbzeug; beispielsweise ein Rohr, aus einem mit PTFE getränkten Vlies hergestellt, welches in einem anschließenden Sintervorgang wärmebehandelt und abschließend formgebend bearbeitet wird. Das Drosselelement kann auch aus einem Hochtemperatur-Thermoplast bestehen. Derartige Thermoplaste sind beispielsweise Polyetherketone (PEK, PEEK) oder Polyimide (PI, PBMI, PAI, PEI), die mit verschiedenen Füllstoffen versetzt sein können. Diese Kunststoffe können spritzgegossen oder anderweitig über die Schmelze formgebend bearbeitet werden, wobei auch komplexe Formgebungen möglich sind. Dadurch können aus diesen Werkstoffen einfach und kostengünstig Drosselelemente hergestellt werden. Als Füllstoff gelangen bei Drosselelementen häufig metallische Werkstoffe, beispielsweise Bronze zum Einsatz. Werden diese Füllstoffe im Bereich der Oberfläche entfernt, ergibt sich eine strukturierte Oberfläche mit einer Vielzahl von Vertiefungen, durch die sich die Reibung verringert.

Dem Spalt kann eine Bohrung zur Zuführung eines Schmiermittels zugeordnet sein, wobei in der Bohrung eine Drosseleinrichtung angeordnet ist. Durch das Drosselelement wird der Schmiermittelstrom insbesondere bei hohen Drehzahlen und daraus resultierenden hohen Schmiermitteldrücken reduziert. Da die Lageranordnung so ausgelegt ist, dass bereits bei geringen Schmiermitteldrücken eine ausreichende Schmierung gegeben ist, kann sich bei hohen Drehzahlen eine Überversorgung der Lageranordnung ergeben. Durch das Drosselelement wird eine Überversorgung verhindert. Das Drosselelement kann eine Bohrung mit kleinem Durchmesser sein oder eine Drosselblende oder ein Einsatz sein, der vor die Bohrung gesetzt wird und den Querschnitt verkleinert.

Die Drosseleinrichtung kann verstellbar sein. Dabei wird der Querschnitt der Drosseleinrichtung in Abhängigkeit von der Viskosität, beispielsweise durch flexible Klappen, verstellbar sein.

Unter Umständen kann eine erhöhte Reibung in der Lageranordnung aus einem Schmiermittel-Überdruck resultieren, der bei einem Überangebot an Schmiermittel innerhalb der Lageranordnung entstehen kann. Zur Lösung dieses Problems kann ein Teil des Schmiermittels durch einen Bypass abgeführt werden, wobei der Bypass vorzugsweise in dem Drosselelement vorgesehen ist und sich dort in axialer Richtung erstreckt. Durch den Bypass werden Druckspitzen abgebaut, die sonst zu einer erhöhten Reibung in der Lageranordnung führen könnten. Der Bypass kann durch sich in axialer Richtung erstreckende Oberflächenstrukturen, beispielsweise vergleichbar der zuvor beschriebenen Nuten, schräg verlaufenden Rillen oder ähnlichen von einer Stirnseite zur anderen Stirnseite erstreckenden Strukturen gebildet sein. Es ist auch denkbar, dass der Bypass aus einer oder mehreren axial verlaufenden Entlastungsbohrungen gebildet ist. Je nach Lage der Entlastungsbohrung in Bezug auf die dem Spalt zugeordnete Stirnseite kann durch die Entlastungsbohrung der Schmiermitteldruck und die Schmiermittelmenge in dem Spalt beeinflusst werden. Beruht die erhöhte Reibung vorwiegend aus einem erhöhten Schmiermittel-Überdruck ist auch denkbar, dass die Entlastungsbohrung nicht nur ergänzend zur hydrodynamisch aktiven Struktur, sondern auch statt dieser in dem Drosselelement vorgesehen ist. Eine vorteilhafte Ausgestaltung dieser Schmiermittel-regulierenden Einheit ist eine Kombination der Entlastungsbohrung mit der zuvor beschriebenen Drosseleinrichtung.

### Kurzbeschreibung der Zeichnung

Einige Ausführungsbeispiele der erfindungsgemäßen Lageranordnung werden nachfolgend anhand der Figuren näher erläutert. Diese zeigen, jeweils schematisch:
Fig. 1 eine Lageranordnung;
Fig. 2 eine Lageranordnung mit einem zusätzlichen Lagerelement;
Fig. 3 ein Drosselelement mit Oberflächenstrukturen.

### Ausführung der Erfindung

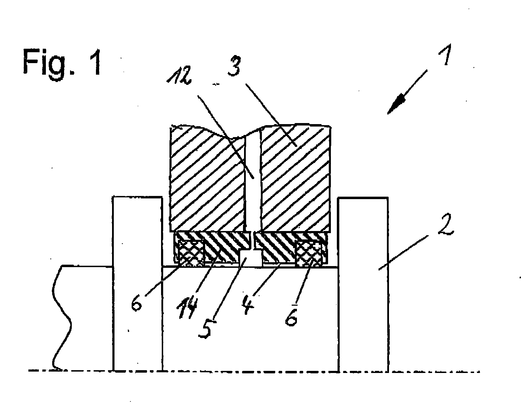

Figur 1 zeigt eine Lageranordnung 1 zur Lagerung einer Welle 2 in einem Gehäuse 3. Dem Gehäuse 3 ist eine Lagerschale 14 zugeordnet in dem eine schalenförmige Lagerfläche 4 ausgebildet ist, auf der die Welle 2 positionierbar ist. Zwischen Lagerfläche 4 und Welle 2 bildet sich im Betrieb durch den hydrodynamischen Druck des Schmiermittels ein Spalt 5 aus. Zur Begrenzung des Schmiermittelabflusses sind in dem Spalt 5 zwei Drosselelemente 6 vorgesehen, die jeweils einem Rand der Lagerfläche 4 zugeordnet sind. Die Drosselelemente 6 sind in Nuten geführt und fixiert, wobei die Nuten in der Lagerschale 14 angeordnet sind. In dieser Ausgestaltung sind die Drosselelemente 6 halbkreisförmig als Rechteckring ausgebildet, Zwischen den Drosselelementen 6 ist eine Bohrung 12 vorgesehen, wobei in der Bohrung 12 eine Drosseleinrichtung 13 in Form einer Querschnittsverengung vorgesehen ist, durch den der Schmiermiftelstrom begrenzt ist. Die Drosseleinrichtung 13 kann in anderen Ausgestaltungen auch so ausgebildet sein, dass sie verstellbar ist. Die der Welle 2 zugewandte Fläche 7 des Drosselelementes 6 ist mit einer hydrodynamisch aktiven Oberflächenstruktur 8 versehen. In dieser Ausgestaltung ist die Oberflächenstruktur 8 durch eine Beschichtung 10 aus PTFE gebildet.

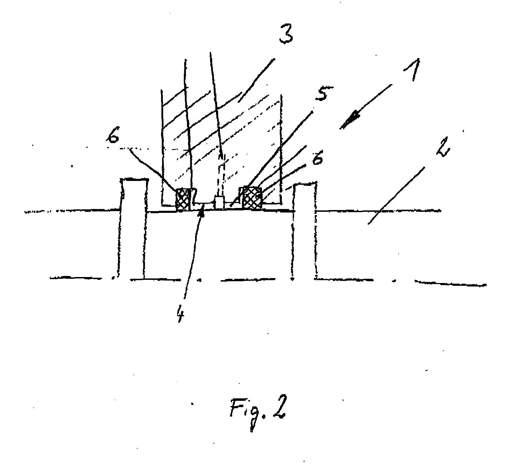

Figur 2 zeigt eine Lageranordnung 1 zur Lagerung einer Welle 2 in einem Gehäuse 3. In dem Gehäuse 3 ist direkt eine schalenförmige Lagerfläche 4 ausgebildet, auf der die Welle 2 positionierbar ist. Zwischen Lagerfläche 4 und Welle 2 bildet sich im Betrieb durch den hydrodynamischen Druck des Schmiermittels ein Spalt 5 aus. Zur Begrenzung des Schmiermittelabflusses sind in dem Spalt 5 zwei Drosselelemente 6 vorgesehen, die jeweils einem Rand der Lagerfläche 4 zugeordnet sind. Die Drosselelemente 6 sind in Nuten geführt und fixiert, wobei die Nuten in der Lagerschale 14 angeordnet sind. In dieser Ausgestaltung sind die Drosselelemente 6 halbkreisförmig als Rechteckring ausgebildet. Die der Welle 2 zugewandte Fläche 7 des Drosselelementes 6 ist mit einer hydrodynamisch aktiven Oberflächenstruktur 8 versehen. In dieser Ausgestaltung ergibt sich die Oberflächenstruktur 8 durch eine Aktivierung der Fläche 7 mittels Corona- oder Plasmabehandlung.

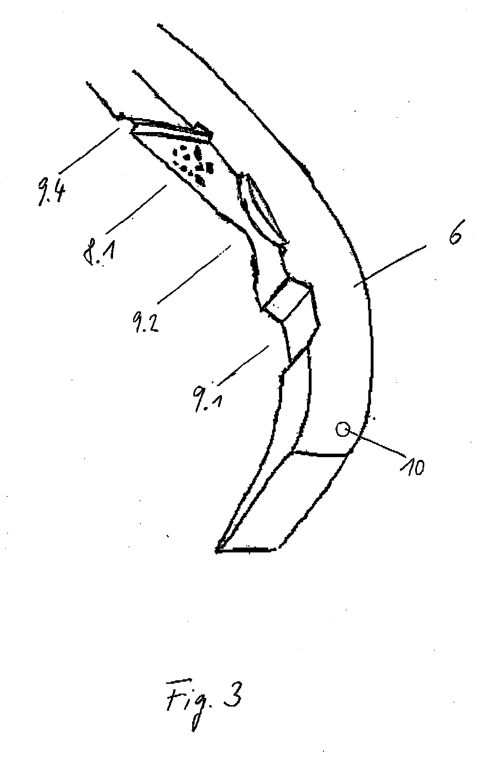

Figur 3 zeigt exemplarisch einige Ausgestaltungen von Oberflächenstrukturen 8, die in die der Welle 2 zugewandten Fläche 7 des Drosselelementes 6 eingebracht sind. Grundsätzlich ist die Oberflächenstruktur 8 durch Ausnehmungen 9 gebildet. In einer Ausgestaltung ist die Ausnehmung 9.1 trapezförmig und erstreckt sich über die gesamte Breite der Fläche 7. Die Ausnehmung 9.1 wirkt aufgrund ihrer Ausgestaltung auch als Bypass. In einer weiteren Ausgestaltung sind die Ausnehmungen 9.2 kreissegmentförmig ausgebildet und den Flanken zugeordnet. Eine andere Ausgestaltung zeigt eine Oberflächenstruktur 8.1 die aus einer Vielzahl von Erhebungen und Vertiefungen gebildet ist und orangenhautförmige Struktur aufweist. Die Oberflächenstruktur 8.1 kann dadurch gebildet sein, dass Füllstoffe, die in dem Werkstoff des Drosselelementes enthalten sind, an der Fläche 7 wenigstens teilweise herausgelöst sind. Eine vierte Ausgestaltung zeigt eine Ausnehmung 9.4, die nutförmig ist und sich schräg von einer Flanke zur anderen Flanke erstreckt. Auch diese Ausnehmung 9.4 wirkt als Bypass. Exemplarisch ist eine Entlastungsbohrung 10 gezeigt, die sich von einer zur anderen Stirnseite erstreckt.

## Patentansprüche

1. Lageranordnung (1) zur Lagerung einer Welle (2) in einem Gehäuse (3), wobei in dem Gehäuse (3) zumindest eine schalenförmige Lagerfläche (4) ausgebildet ist, auf der die Welle (2) positionierbar ist, wobei sich zwischen Lagerfläche (4) und Welle (2) ein Spalt (5) ausbildet und wobei in dem Spalt (5) wenigstens ein Drosselelement (6) vorgesehen ist, **dadurch gekennzeichnet, dass** die Lagerfläche (4) und/oder die der Welle (2) zugewandte Fläche (7) des Drosselelementes (6) mit einer hydrodynamisch aktiven Oberflächenstruktur (8) versehen ist.

2. Lageranordnung nach Anspruch 1, **dadurch gekennzeichnet, dass** die Oberflächenstruktur (8) durch Ausnehmungen (9) gebildet ist.

3. Lageranordnung nach Anspruch 2, **dadurch gekennzeichnet, dass** die Ausnehmungen (9) den Flanken zugeordnet sind.

4. Lageranordnung nach Anspruch 2 oder 3, **dadurch gekennzeichnet, dass** sich die Ausnehmungen (9) über die gesamte Breite der Fläche (7) erstrecken.

5. Lageranordnung nach einem der Ansprüche 1 bis 4, **dadurch gekennzeichnet, dass** die Oberflächenstruktur (8) aus einer Vielzahl von Erhebungen und Vertiefungen gebildet ist.

6. Lageranordnung nach einem der Ansprüche 1 bis 5, **dadurch gekennzeichnet, dass** die Oberflächenstruktur (8) eine Beschichtung (10) umfasst.

7. Lageranordnung nach einem der Ansprüche 1 bis 6, **dadurch gekennzeichnet, dass** die Lagerfläche (4) und/oder die Fläche (7) aktiviert ist.

8. Lageranordnung nach einem der Ansprüche 1 bis 7, **dadurch gekennzeichnet, dass** das Drosselelement (6) aus einem Werkstoff enthaltend Füllstoffe erzeugt ist, wobei die Füllstoffe an der der Welle (2) zugewandten Fläche (7) zumindest teilweise herausgelöst sind.

9. Lageranordnung nach einem der Ansprüche 1 bis 8, **dadurch gekennzeichnet, dass** dem Spalt (5) eine Bohrung (12) zur Zuführung eines Schmiermittels zugeordnet ist, wobei in der Bohrung (12) eine Drosseleinrichtung (13) angeordnet ist.

10. Lageranordnung nach Anspruch 9, **dadurch gekennzeichnet, dass** die Drosseleinrichtung (13) verstellbar ist.

11. Lageranordnung nach einem der Ansprüche 1 bis 10, **dadurch gekennzeichnet, dass** in dem Drosselelement (6) ein Bypass vorgesehen ist.

## Geänderte Patentansprüche

### Geänderte Patentansprüche gemäss Regel 137(2) EPÜ.

**1.** Lageranordnung (1) zur Lagerung einer Welle (2) in einem Gehäuse (3), wobei in dem Gehäuse (3) zumindest eine schalenförmige Lagerfläche (4) ausgebildet ist, auf der die Welle (2) positionierbar ist, wobei sich zwischen Lagerfläche (4) und Welle (2) ein Spalt (5) ausbildet und wobei in dem Spalt (5) wenigstens ein Drosselelement (6) vorgesehen ist, **dadurch gekennzeichnet, dass** die der Welle (2) zugewandte Fläche (7) des Drosselelementes (6) mit einer hydrodynamisch aktiven Oberflächenstruktur (8) versehen ist.
